# EUROPEAN PATENT SPECIFICATION

(11) **EP 1 399 031 B1**
(45) Date of publication and mention of the grant of the patent: **03.11.2004**
(21) Application number: 02743978.5
(22) Date of filing: 25.06.2002
(51) Int. Cl.: A23G 7/02

(54) **COOLING MACHINE FOR LOLLIPOPS**
KÜHLVORRICHTUNG FÜR LUTSCHBONBONS
APPAREIL DE REFROIDISSEMENT POUR SUCETTES

(30) Priority: 25.06.2001 NL 1018380
(43) Date of publication of application: 24.03.2004
(73) Proprietor: CFS Weert B.V., 6006 RV Weert (NL)
(72) Inventor: ASMA, Seferinus, Jelle, NL-5503 CM Veldhoven (NL); CUYPERS, Leonardus, Hermanus, Maria, NL-6011 RM Ell (NL)
(74) Representative: Ferguson, Alexander
(86) International application number: PCT/NL2002/000423
(87) International publication number: WO 2003/000067

(56) References cited:
- EP-A- 0 654 642
- CH-A- 455 477
- GB-A- 1 126 183
- NL-C- 144 053
- US-A- 4 735 089
- US-A- 4 781 243
- US-A- 4 936 377
- US-A- 5 483 752
- US-B1- 6 230 421
- DATABASE WPI Section PQ, Week 199240 Derwent Publications Ltd., London, GB; Class Q76, AN 1992-329858 XP002190341 -& SU 1 698 606 A (KURSK MAGNETIC ANOMALY PROBLEMS RES INST), 15 December 1991 (1991-12-15)
- PATENT ABSTRACTS OF JAPAN vol. 1999, no. 11, 30 September 1999 (1999-09-30) & JP 11 156975 A (NIPPON STEEL CORP), 15 June 1999 (1999-06-15)
- DATABASE WPI Section Ch, Week 198710 Derwent Publications Ltd., London, GB; Class A32, AN 1987-068547 XP002190342 & JP 62 021534 A (BRIDGESTONE TIRE KK), 29 January 1987 (1987-01-29)
- PATENT ABSTRACTS OF JAPAN vol. 015, no. 463 (M-1183), 25 November 1991 (1991-11-25) & JP 03 199571 A (ASAHI CHEM IND CO LTD), 30 August 1991 (1991-08-30)
- DATABASE WPI Section Ch, Week 198844 Derwent Publications Ltd., London, GB; Class L02, AN 1988-312432 XP002190343 -& JP 63 231190 A (MITSUBISHI DENKI KK), 27 September 1988 (1988-09-27)
- PATENT ABSTRACTS OF JAPAN vol. 1995, no. 06, 31 July 1995 (1995-07-31) & JP 07 077297 A (SANYO ELECTRIC CO LTD), 20 March 1995 (1995-03-20)

## Description

The invention relates to a cooling machine for lollipops.

In a possible production form lollipops are collected after manufacturing prior to being packaged at a later moment. The lollipops have to be cooled down after forming as they would otherwise stick to each other and deform. In case of round lollipops, such as lollipops having a spherical shape or a kind of cylindrical shape, it should be prevented that the lollipops -that are still soft after forming- are flattened on one side because they lie still and deform under the influence of their own weight. It is attempted to prevent this by reciprocally moving the support surface on which the lollipops are cooled with cooling air, for instance with a frequency of 1 50/min. This shaking, as a result of which the lollipops roll to and fro, costs a lot of power.

It is desired for the power-demanding cooling process, to cool large numbers of lollipops, as a result of which an as large as possible support surface (long and wide) is wanted. However, this has the drawback that the (heavier) support plate may sag, as a result of which the lollipops will tend to move towards each other and to the centre, and stick together and deform.

Another drawback is that the weight of the support plate becomes larger, as a result of which more power is necessary for shaking, and a heavy - expensive- drive is needed.

It is an object of the invention to at least improve on some of these points. From one aspect the invention to that end provides a cooling machine for lollipops, comprising at least one support plate having a support surface for supporting lollipops during cooling, means for generating a cooling air flow past the support surface and means for shaking the support surface, the plate being a honeycomb panel having a honeycomb core and an upper cover plate and a lower cover plate, the core being made of metal and the cover plates being fixedly adhered to the core and the upper cover plate forming the support surface directly or not.

Such a support plate is rigid and will in case of larger spans not sag or very slightly so, so that also in case of large spans a truly flat support surface is offered and the lollipops will not tend to move to a lowered area to cluster there and deform. Such a support plate may moreover be lightweight.

Preferably the core and the cover plates are made of aluminium, as a result of which a very rigid structure is obtained, which is very lightweight and as a result can be shaken with very little power.

Preferably the upper cover plate is coated with a layer of resilient synthetic material having a water repellent, cleansing means resistant closed surface, with sufficient friction with respect to the lollipop, so that the reciprocally moving coating brings the lollipop in motion and it cannot remain lying still. Preferably the layer is adhered over its entire surface to the upper cover plate.

In a further development of the cooling machine according to invention it comprises a supply for the lollipops and a discharge for the lollipops and a number of support plates positioned in between them inclined from the supply to the discharge, the support plates being inclined in opposite directions. Thus a kind of vertical zig-zag track is provided for the lollipops, forming a long cooling path that needs little room in horizontal direction. In case of an odd number of support plates the discharge can be situated at the side of the cooling machine that is opposite the supply, as a result of which the supply and the discharge do not hinder each other.

Preferably the shaking means are adapted for shaking consecutive support plates simultaneously in a regular out-of-phase manner, and preferably in transverse direction to the inclination of the support plate in question, so that the force directions are distributed and imbalance is prevented as much as possible.

The cooling means preferably comprise cooling air flow generators, positioned in a cooling air circuit in which the support surfaces are included in longitudinal direction, so that cooling air is urged over the lollipops, past at least almost the entire cooling path, enabling the air flow conditions over the support plates to be constant to a high degree. In known cooling machines the circulating cooling air is urged in vertical sense, near the discharge end, over the support plates, and then propelled up again in the discharge end. In the areas of the support plates situated more at a distance from the discharge end, the circulation of cooling air is less intensive, and as a result the efficiency is lower.

Preferably the cooling air circuit comprises the supply end, the discharge end and a horizontal return channel which is situated above over the upper support plate, a separation plate being arranged in between the return channel and the upper support plate. Thus the cooling air circuit circulates in a vertical plane, and the space at the top of the cooling machine is used for the return flow, as a result of which the width of the cooling machine can remain limited.

Preferably the cooling means comprise propelling means, particularly fans, that are placed at the supply end.

In an advantageous manner the propelling means can be placed at the top and convert the flow of the air from a vertical direction into a horizontal direction.

When the supply is narrower than the support plate consecutive to it, the cooling air can easily flow past it in the circulation.

It may occur that grit is present on the support plates, for instance from the thin layer-like protrusions and from residues of a previous cooling step, for instance with lollipops of a different colour. The older the machine with which the lollipops are made is, the more thin layer-like protrusions there will be on the lollipops. When changing to another colour there is the risk that the lollipops will have colour residues of the previous process step on them.

To solve this problem the invention from a different aspect provides a lollipop cooling machine with inclined, vibrated, conveying support plates, baffles being arranged at the lower end of each inclined support plate at either side of the lower or discharge end thereof, which baffles are provided with slits situated parallel to the support surface, the height of the slits being smaller than the thickness of the sticks of the lollipops. Thus grit is discharged, but lollipops cannot get stuck in the slits. The slit passage will not get clogged up.

Preferably the baffles are slanting with respect to the direction of inclination, considered in top view, as a result of which the interception of grit is improved. Grit reception means behind the slits in the baffles facilitate the discharge thereof.

The invention will now be elucidated on the basis of an exemplary embodiment shown in the attached drawings, in which:
Figure 1 shows a side view of an example of a cooling device according to the invention;
Figure 2 shows an end view of the cooling device of figure 1;
Figure 3 shows a schematic top view of the cooling device of the figures 1 and 2;
Figure 4 shows a number of parts of the cooling device of the figures 1-3 in schematic, exploded view;
Figures 4A and 4B show some details of the support plates of the cooling device of the preceding figures; and
Figure 5 shows a detail of the build-up of the said support plate.

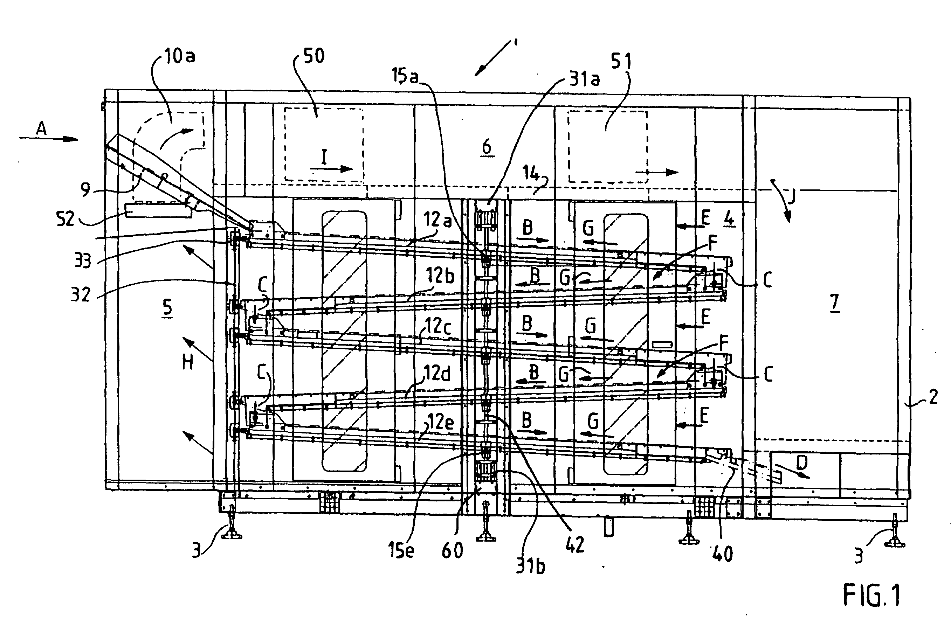

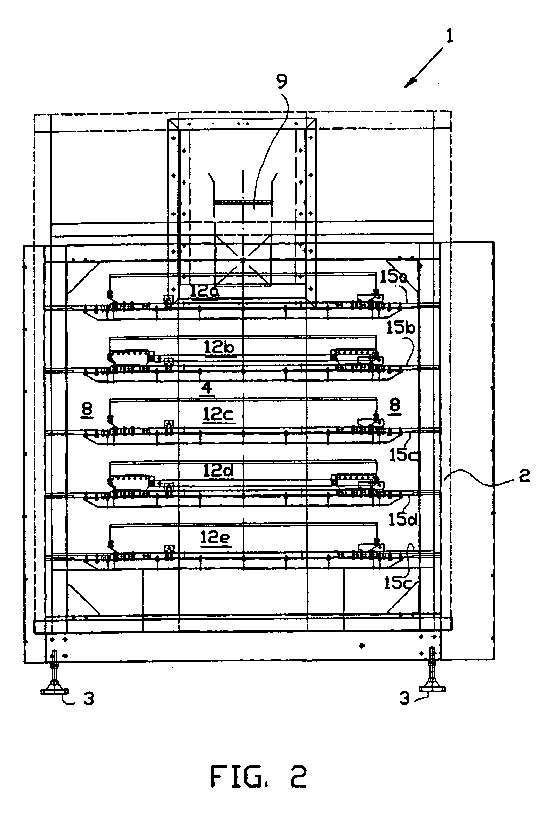

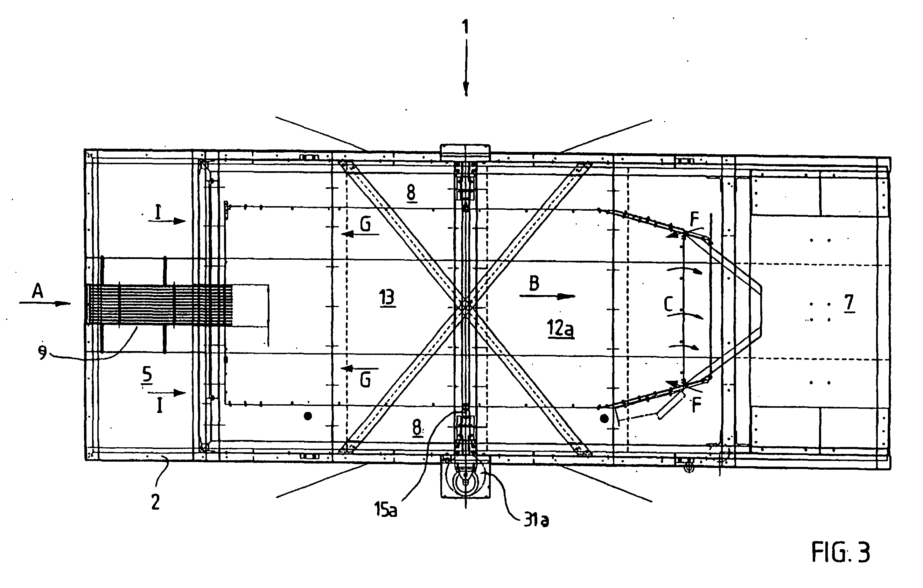

The cooling device 1 in figures 1-3 comprises a frame 2 placed on a basis with adjustable legs 3. The frame 2 is insulated and plated to the outside and the top, so that an insulated casing is formed. Within the plating can be discerned an inner space 4, and end space 5, an upper space 6, and end space 7, as well as side spaces 8 (see figures 2 and 3). The spaces 4 and 6 are separated from each other by means of upper plate 14, but the spaces 4 and 7 and 4 and 5 are in open connection with each other.

At the top in the end 5 a supply chute 9 is positioned, along which lollipops supplied in the direction A can move to the inner space 4.

At the other side a discharge chute 40 is positioned at the bottom, from which the cooled lollipops can be discharged from the inner space 4 in the direction D to be collected in a transport tray that is not further shown.

At the supply side two fans 10a, 10b are positioned next to to the supply chute 9. Upstream of the fans 10a, 10b there is an air filter 52. In the upper space 6 a condenser 50 and a heater 51 are positioned. In the upper part of the end space 7, in the transition of the upper space 6, a cooling space that is not further specified is situated, in which the circulating air (see arrow H, I, J) is cooled. The air channels 5, 6 and 7 are thus formed within the frame 2 by internal channels, as a result of which the device does not become too wide, which is advantageous in the set-up of several devices adjacent to each other. Because said channels are in fact limited by the insulated casing, condensation is prevented, which is of importance as in the area of use sugar substance is used, which with condensation might give rise to the formation of unwanted sticky masses. This might otherwise occur when free-lying tubes would be used for the cooling air movement. The use of the casing in the forming of channels according to the invention is cheap and gives rise to few problems in connection with cleaning.

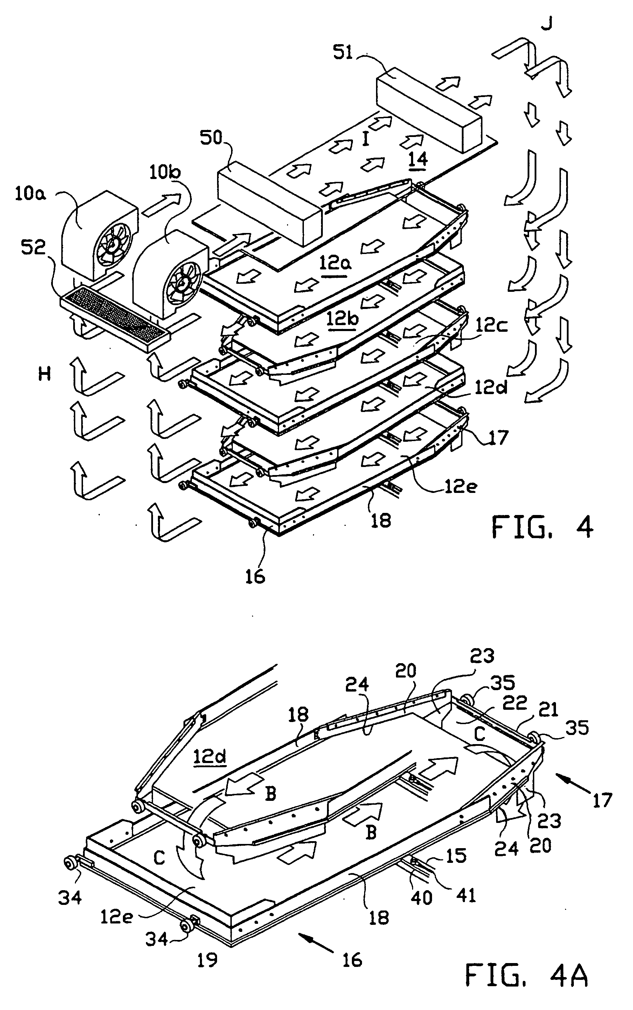

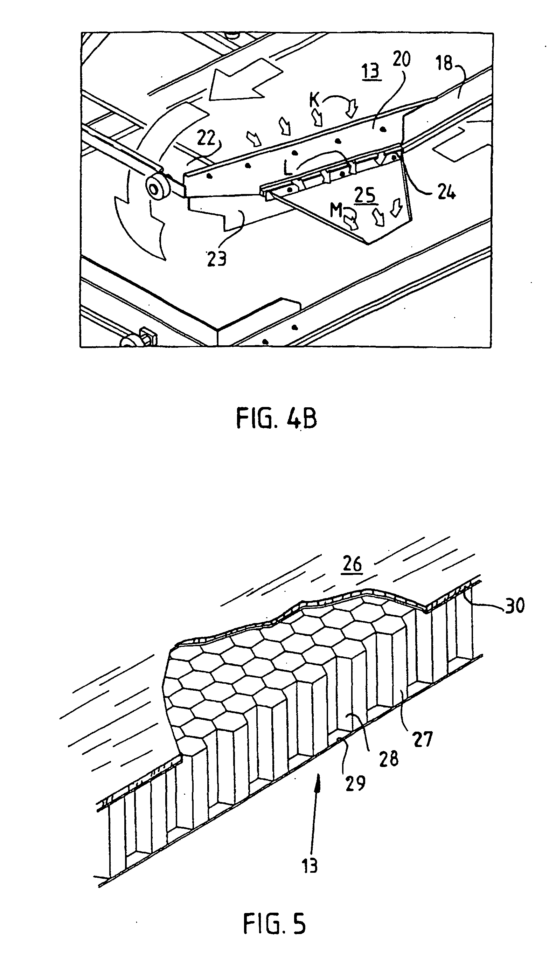

In the inner space 4 five support plates 1 2a-e are positioned in the form of a marble alley. Said support plates 12a-e are further shown in the figures 4A and 4B. Each support plate 12 has an upstream end 16 and a downstream end 17, and a bottom 13, side edges 18, end edge 19 at the upstream end 16, and two slanting walls 20, an end edge 21, and between the end edge 21 and the bottom 13 a drop opening 22, at the downstream end 17. The drop opening 22 is limited to either side by depending rubber partitions 23.

In the centre the support plates 12a-e are supported on respective cross bars 15a-e, which at the end are supported on rollers for movement in transverse direction. The cross bars 15a-e are furthermore connected to respective eccentrics on a vertical driving shaft 42 by means of ball-and-socket joint 40 and drive rods 41, which driving shaft is bearing mounted in bearings 31 a,b and is rotated by motor 60 (see figure 1 and figure 4A). The eccentrics for the respective bars 15a-e are positioned offset one to the other at an angle (regularly divided over 360°), as a result of which imbalance is avoided as much as possible.

At the ends 16 and 17 the support plates are provided with support rollers 34 and 35 that are able to reciprocally move on the cross girders 33, which are attached to vertical posts 32 that are permanent to the frame 2 (figure 1, left: on the right hand side a comparable structure is present).

At the downstream end 17, the slanting walls 20 are provided with a longitudinal slit 24 near the upper surface of the bottom 13, which slit discharges into a chute 25.

The support plate 12, particularly its bottom 13, as can be seen in figure 5, is built up from a support layer 26 of resilient synthetic material, as well as situated underneath it and adhered to it, an aluminium honeycomb plate 27, having a core 28 of honeycomb cells and a lower cover plate 29 and an upper cover plate 30. Such a bottom is rigid against sagging and remains flat, also in case of larger spans. Moreover the bottom 13 is lightweight. The resilient synthetic material is resistant against cleaning agents and offers sufficient friction with respect to the lollipop to bring the lollipop in motion during the shaking movement, so that the lollipops do not tend to lie still. A suitable material to that end is Nonex 2M1 570 FDA, built up from an upper layer of 0.5 mm of PVC Nonex 65 FDA blue and a lower layer of fabric impregnated with PUR Ropanol blue, available from the firm Ammeraal.

In operation the lollipops provided with a stick are supplied in the direction A. Cooling air is circulated by the fans 10a and 10b, and flows in the direction E in the inner space 4, above the upstream end of the support plate 12a, underneath the upstream end of the support plate 12b and simultaneously above the downstream end of the support plate 12c, respectively underneath the upstream end of the support plate 12d and above the downstream end of the support plate 12e. The air flows are permitted to move downwards over the inclined wall members 20 in the direction F in order to also be able to flow over the surface of the support plates 12b and 12d.

In figure 1 it is shown that the air flows occur in the directions E, F and G and then subsequently exit at the supply end 5 in the direction H, flow upwards, through filter 52 to be propelled again by the fans 10a and 10b on either side along the supply chute 9, and then in the direction I, through the upper space 6 and the condenser 50 and heater 51 placed in there, separated from the inner space 4 by the upper plate 14. The air bends downwards in the direction J to subsequently flow in the direction E in the inner space 4 again, over the plates 12a-e, to the space 5, all this as a result of the pressure difference between the spaces 7 and 5.

The stream of recently formed, still warm lollipops arrives from the direction A, over the supply chute 9, and moves in the direction B over the support plate 12a. At the end of the support plate 12a the lollipops fall in the direction C through the opening 22, and arrive on the next support plate 12b. This is repeated a number of times, the lollipops on the support plates 12a, 12c, 12e being in counter flow with the cooling air, and on the support plates 12b and 12d being in flow therewith.

Finally the lollipops arrive at the downstream end of the lowermost support plate 1 2e to be discharged in the direction D, via the discharge chute 40.

As a result of the flatness of the bottoms 13 the lollipops remain nicely distributed during the movements over the various support plates 12a-e as a result of which the lollipops remain really round.

As a result of the slanting walls 20 and the slits 24 in there, a sideward reception and discharge means is provided for grit from the lollipops. This can be discharged in the direction K, L and M, via the chutes 25 and then into a tray that is not further shown. The height of the slits is smaller than the thickness of the lollipops' sticks, so that the lollipops remain entirely out of the slits 24.

The slits 24 can also be used in for instance sweeping the support plates 12 clean by means of a broom or sweeper in between the operation processes.

The movement of the grit towards the slits 24 is enhanced because the shaking motion of the support plates 12 is transverse to the conveyance direction B.

## Claims

1. Cooling machine for lollipops, comprising at least one support plate having a support surface for supporting lollipops during cooling, means for generating a cooling air flow past the support surface and means for shaking the support surface, the plate being a honeycomb panel having a honeycomb core and an upper cover plate and a lower cover plate, the core being made of metal and the cover plates being fixedly adhered to the core and the upper cover plate forming the support surface directly or not.

2. Cooling machine according to claim 1, the core and the cover plates being made of aluminium.

3. Cooling machine according to claim 1 or 2, the upper cover plate being coated with a layer of resilient synthetic material having a water repellent, cleansing means resistant closed surface.

4. Cooling machine according to claim 3, the layer consisting of a material with sufficient friction with respect to the lollipop in order to bring the lollipop in motion during the shaking motion.

5. Cooling machine according to claim 3 or 4, the layer over its entire surface being adhered to the upper cover plate.

6. Cooling machine according to any one of the preceding claims, comprising a supply for the lollipops and a discharge for the lollipops and a number of support plates positioned in between them inclined from the supply to the discharge, the support plates being inclined in opposite directions.

7. Cooling machine according to claim 6, the shaking means being adjusted for shaking the support plates in transverse direction to the inclination.

8. Cooling machine according to claim 6 or 7, the shaking means being adapted for shaking consecutive support plates simultaneously in a regular out-of-phase manner.

9. Cooling machine according to claim 6, 7 or 8, the support plates in side view defining a vertical zig-zag shape, the supply being situated at the top.

10. Cooling machine according to claim 9, the number of support plates being odd and the discharge being situated at the side of the cooling machine that is opposite the supply.

11. Cooling machine according to claim 10, the cooling means comprising cooling air flow generators, positioned in a cooling air circuit in which the support surfaces are included in longitudinal direction.

12. Cooling machine according to claim 11, the cooling air circuit comprising the supply end, the discharge end and a horizontal return channel which is situated above over the upper support plate, a separation plate being arranged in between the return channel and the upper support plate.

13. Cooling machine according to claim 12, the cooling means comprising propelling means, particularly fans, that are placed at the supply end.

14. Cooling machine according to claim 13, the propelling means being placed at the top and converting the flow of the air from a vertical direction into a horizontal direction.

15. Cooling machine according to claim 12, 13 or 14, the supply being narrower than the support plate consecutive to it.

16. Cooling machine according to any one of the claims 6-15, baffles being arranged at the lower end of each inclined support plate at either side of the lower or discharge end thereof, which baffles are provided with slits situated parallel to the support surface, the height of the slits being smaller than the thickness of the sticks of the lollipops.

17. Cooling machine according to claim 16, the baffles being inclined with respect to the direction of inclination, considered in top view.

18. Cooling machine according to claim 16 or 17, further provided with grit reception means behind the slits in the baffles.

## Patentansprüche

1. Kühlvorrichtung für Lutschbonbons, umfassend zumindest eine Stützplatte mit einer Stützfläche zum Stützen der Lutschbonbons während der Kühlung, Mittel zum Generieren eines Kühlluftstroms entlang der Stützfläche und Mittel zum Schütteln der Stützfläche, wobei die Platte eine Wabentafel ist mit einem Wabenkern und eine obere Deckplatte und eine untere Deckplatte, wobei der Kern aus Metall hergestellt ist und die Deckplatten fest an dem Kern gehaftet sind und die obere Deckplatte ja oder nicht direkt die Stützfläche bildet.

2. Kühlvorrichtung nach Anspruch 1, wobei der Kern und die Deckplatten aus Aluminium hergestellt sind.

3. Kühlvorrichtung nach Anspruch 1 oder 2, wobei die obere Deckplatte mit einer Schicht aus elastischem Kunststoffmaterial mit einer wasserabweisenden, Reinigungsmittelsicheren geschlossenen Oberfläche beschichtet ist.

4. Kühlvorrichtung nach Anspruch 3, wobei die Schicht aus einem Material mit ausreichender Reibung bezüglich des Lutschbonbons besteht, um den Lutschbonbon während der Schüttelbewegung in Bewegung zu setzen.

5. Kühlvorrichtung nach Anspruch 3 oder 4, wobei die Schicht über die ganze Oberfläche an der oberen Deckplatte gehaftet ist.

6. Kühlvorrichtung nach einem der vorhergehenden Ansprüche, umfassend eine Zufuhr für die Lutschbonbons und eine Abfuhr für die Lutschbonbons und eine Anzahl von dazwischen, sich von der Zufuhr zu der Abfuhr neigenden, angeordneten Schützplatten, wobei die Stützplatten sich in entgegengesetzten Richtungen neigen.

7. Kühlvorrichtung nach Anspruch 6, wobei die Schüttelmittel ausgerichtet sind zum in Querrichtung auf der Neigung Schütteln der Stützplatten.

8. Kühlvorrichtung nach Anspruch 6 oder 7, wobei die Schüttelmittel angepasst sind zum gleichzeitig, auf regelmäßige, fasenverschobene Weise Schütteln von aufeinanderfolgenden Stützplatten.

9. Kühlvorrichtung nach Anspruch 6, 7 oder 8, wobei die Stützplatten in Seitenansicht eine vertikale Zickzackform bestimmen, wobei die Zufuhr obenan gelegen ist.

10. Kühlvorrichtung nach Anspruch 9, wobei die Anzahl Stützplatten ungerade ist und die Abfuhr an der, der Zufuhr entgegengesetzten, Seite der Kühlvorrichtung gelegen ist.

11. Kühlvorrichtung nach Anspruch 10, wobei die Kühlmittel Kühlluftstromgeneratore umfassen, die in einem Kühlluftkreis aufgestellt sind, worin die Stützflächen in Längsrichtung aufgenommen sind.

12. Kühlvorrichtung nach Anspruch 11, wobei der Kühlluftkreis das Zufuhrende, das Abfuhrende und einen horizontalen über der oberen Stützplatte gelegenen Rückkehrkanal umfaßt, wobei zwischen dem Rückkehrkanal und der oberen Stützplatte eine Trennplatte angeordnet ist.

13. Kühlvorrichtung nach Anspruch 12, wobei die Kühlmittel an dem Zufuhrende angeordnete Staumittel, insbesondere Ventilatore, umfassen,

14. Kühlvorrichtung nach Anspruch 13, wobei die Staumittel obenan angeordnet sind und die Luftströmung von einer Vertikalrichtung in eine Horizontalrichtung umsetzen.

15. Kühlvorrichtung nach Anspruch 12, 13 oder 14, wobei die Zufuhr enger ist als die darauffolgende Stützplatte.

16. Kühlmaschine nach einem der Ansprüche 6-15, wobei an dem unteren Ende jeder neigenden Stützplatte, an beiden Seiten des unteren oder des Abfuhrendes davon, Kehrwände angeordnet sind, die mit parallel an der Stützfläche gelegenen Spalten versehen sind, deren Höhe kleiner ist als die Dicke der Stöckchen der Lutschbonbons.

17. Kühlvorrichtung nach Anspruch 16, wobei die Kehrwände bezüglich der Neigungsrichtung schrägstehen, in Oberansicht betrachtet.

18. Kühlvorrichtung nach Anspruch 16 oder 17, weiter mit Grießauffangmitteln hinter den Spalten in den Kehrwänden versehen.

## Revendications

1. Machine de refroidissement pour sucreries, comprenant au moins une plaque de support ayant une surface de support pour supporter des sucreries pendant le refroidissement, un moyen pour générer un flux d'air de refroidissement le long de la surface de support et un moyen pour secouer la surface de support, la plaque étant un panneau à nid d'abeilles ayant une âme en nid d'abeilles et un couvercle supérieur et un couvercle inférieur, l'âme étant réalisée en métal et les couvercles adhérant de manière permanente à l'âme et le couvercle supérieur formant la surface de support directement ou non.

2. Machine de refroidissement selon la revendication 1, l'âme et les couvercles étant réalisés en aluminium.

3. Machine de refroidissement selon la revendication 1 ou 2, le couvercle supérieur étant revêtu d'une couche de matière synthétique résiliente ayant une surface fermée, hydrofuge, résistant aux moyens de nettoyage.

4. Machine de refroidissement selon la revendication 3, la couche constituée d'une matière avec un frottement suffisant par rapport à la sucrerie de manière à mettre la sucrerie en mouvement pendant le mouvement de secouage.

5. Machine de refroidissement selon la revendication 3 ou 4, la couche adhérant au couvercle supérieur sur toute sa surface.

6. Machine de refroidissement selon l'une quelconque des revendications précédentes, comprenant une alimentation pour les sucreries et un déchargement pour les sucreries et plusieurs plaques de support positionnées entre elles inclinées de l'alimentation vers le déchargement, les plaques de support étant inclinées dans des directions opposées.

7. Machine de refroidissement selon la revendication 6, le moyen de secouage étant ajusté pour secouer les plaques de support dans la direction transversale à l'inclinaison.

8. Machine de refroidissement selon la revendication 6 ou 7, le moyen de secouage étant adapté pour secouer des plaques de support consécutives simultanément de manière déphasée régulière.

9. Machine de refroidissement selon la revendication 6, 7 ou 8, les plaques de support définissant en vue latérale une forme en zigzag verticale, l'alimentation étant située à la partie supérieure.

10. Machine de refroidissement selon la revendication 9, le nombre de plaques de support étant impair et le déchargement étant situé sur le côté de la machine de refroidissement qui est opposé à l'alimentation.

11. Machine de refroidissement selon la revendication 10, le moyen de refroidissement comprenant des générateurs de flux d'air de refroidissement, positionnés dans un circuit d'air de refroidissement dans lequel les surfaces de support sont incluses dans une direction longitudinale.

12. Machine de refroidissement selon la revendication 11, le circuit d'air de refroidissement comprenant l'extrémité d'alimentation, l'extrémité de déchargement et un canal de retour horizontal qui est situé au-dessus de la plaque de support supérieure, une plaque de séparation étant disposée entre le canal de retour et la plaque de support supérieure.

13. Machine de refroidissement selon la revendication 12, le moyen de refroidissement comprenant des moyens de propulsion, en particulier des ventilateurs, qui sont placés à l'extrémité d'alimentation.

14. Machine de refroidissement selon la revendication 13, les moyens de propulsion étant placés à la partie supérieure et convertissant le flux de l'air d'une direction verticale en une direction horizontale.

15. Machine de refroidissement selon la revendication 12, 13 ou 14, l'alimentation étant plus étroite que la plaque de support qui lui est consécutive.

16. Machine de refroidissement selon l'une quelconque des revendications 6 à 15, des chicanes étant disposées à l'extrémité inférieure de chaque plaque de support inclinée à l'une quelconque de l'extrémité de déchargement ou inférieure de celle-ci, lesquelles chicanes sont munies de fentes situées parallèlement à la surface de support, la hauteur des fentes étant plus petite que l'épaisseur des bâtons de sucreries.

17. Machine de refroidissement selon la revendication 16, les chicanes étant inclinées par rapport à la direction d'inclinaison, considérée en vue en plan.

18. Machine de refroidissement selon la revendication 16 ou 17, équipée en outre de moyens de réception d'impuretés derrière les fentes dans les chicanes.
